# EUROPÄISCHE PATENTSCHRIFT

(11) **EP 1 614 906 B1**
(45) Veröffentlichungstag und Bekanntmachung des Hinweises auf die Patenterteilung: **30.01.2008**
(21) Anmeldenummer: 05014346.0
(22) Anmeldetag: 01.07.2005
(51) Int. Cl.: F15B 15/14

(54) **Kolben-Zylindereinheit**
Piston-cylinder set
Ensemble piston-cylindre

(30) Priorität: 07.07.2004 DE 102004032794
(43) Veröffentlichungstag der Anmeldung: 11.01.2006
(73) Patentinhaber: LuK Lamellen und Kupplungsbau Beteiligungs KG, 77815 Bühl (DE)
(72) Erfinder: Rammhofer, Thomas, 77880 Sasbach (DE)

(56) Entgegenhaltungen:
- DE-A1- 19 509 356
- DE-A1- 19 717 486
- DE-A1- 19 754 700
- US-B1- 6 272 858

## Beschreibung

Die Erfindung betrifft eine Kolben- Zylindereinheit insbesondere für Kraftfahrzeuge, mit der eine Kraftübertragung mit Hilfe einer variablen hydraulischen Übersetzung realisierbar ist.

Im Allgemeinen ist eine hydraulische Kupplungsbetätigung für Kraftfahrzeuge mit einem Geberzylinder, der über ein Kupplungspedal betätigbar ist, verbunden. Dieser Geberzylinder ist an einen mit Hydraulikflüssigkeit gefüllten Ausgleichsbehälter angeschlossen. Da der Geberzylinder über eine Druckleitung mit einem Nehmerzylinder hydraulisch verbunden ist, wird der beim Niedertreten des Kupplungspedals im Geberzylinder erzeugte Druck über die Flüssigkeitssäule in der Druckleitung auf den Nehmerzylinder übertragen. Als Folge wird das Ausrücklager mit einer Betätigungskraft beaufschlagt, um über einen Ausrückmechanismus die Kupplungsdruckplatte von der Kupplungsmitnehmerscheibe und somit den Motor vom Getriebe des Kraftfahrzeuges zu trennen.

Besonders bei drehmomentstarken Kraftfahrzeugen, bei denen die am Kupplungspedal aufzubringende Betätigungskraft, die zur Übertragung des höheren Drehmomentes notwendig ist, zu verringern, wird im Stand der Technik vorgeschlagen, zwischen Geberzylinder und Nehmerzylinder in der hydraulischen Druckleitung einen pneumatischen Druckverstärker vorzusehen. Beispielhaft dafür ist die in der DE 195 09 356 C2 dargestellte Lösung, bei der ein hydraulisch versorgter Arbeitskolben mit einem pneumatisch beaufschlagten Servokolben gekoppelt ist. Dieser Servokolben wird von einem Steuerventil beaufschlagt. Außerdem ist ein Übersetzungskolben vorgesehen, der ein erstes Flächenverhältnis für eine erste Übersetzung zwischen dem hydraulischer über dem Geberzylinder eingesteuerten Druck und dem pneumatischen Druck bildet, während durch ein zweites Flächenverhältnis zwischen der Wirkfläche des Servokolbens und der Wirkfläche des Arbeitskolbens eine zweite Übersetzung geschaffen wird. Gemäß der DE 197 17 486 C2 wird ein pneumatischer Druckverstärker für hydraulische Anlagen beschrieben, der bei einfachem konstruktiven Aufbau des pneumatischen Druckverstärkers auch im Falle des Ausfalls der Druckluftversorgung eine adäquate Rückmeldung der am Nehmerzylinder der hydraulischen Anlagen herrschenden Kräfte an deren Geberzylinder gewährleistet. Dabei wird der Ansteuerdruckraum des pneumatischen Druckverstärkers ab einer Kraftbeaufschlagung von bestimmter Höhe vom hydraulischen Arbeitsraum des pneumatischen Druckverstärkers hydraulisch getrennt, so dass bei Ausfall der Druckluftversorgung der sowohl den hydraulischen Arbeitsraum als auch den Ansteuerdruckraum begrenzender Arbeitskolben durch Kraftbeaufschlagung des Ansteuerdruckraums verschiebbar ist, um im hydraulischen Arbeitsraum einen vorbestimmten Druck zu erzeugen. Da dabei der im hydraulischen Arbeitsraum herrschende Druck, der für die am Nehmerzylinder wirkenden Kräfte repräsentativ ist, durch den Arbeitskolben des pneumatischen Druckverstärkers eine definierte Übersetzung erfährt, werden die am Nehmerzylinder wirkenden Kräfte adäquat an den mit dem Ansteuerdruckraum hydraulisch verbundenen Geberzylinder zurück gemeldet, so dass auch bei Ausfall der Druckluftversorgung eine Kraftbeaufschlagung des Nehmerzylinders über den Geberzylinder unter Zwischenschaltung des Arbeitskolbens des pneumatischen Druckverstärkers möglich ist.

Weiterhin ist es besonders wichtig, Druckverluste in der hydraulischen Strecke möglichst gering zu halten. Deshalb ist es besonders wichtig, bewegende Teile, wie beispielsweise den Kolben des Geberzylinders gegenüber seinem Gehäuse abzudichten. Dazu sind üblicherweise am Kolben anliegende Dichtungen vorgesehen. Hohe Drücke können zu Spaltextrusion führen und Dichtungsschäden zur Folge haben. Diese Dichtungsschäden führen letztendlich zu einem undichten Hydrauliksystem.

Der Stand der Technik bietet zwar Lösungen für Druckverstärkungen in einer hydraulischen Strecke an, diese beinhalten jedoch immer zusätzliche pneumatische Elemente, die sich ungünstig auf den Bauraum und die Kosten auswirken.

Daher ist es Aufgabe der Erfindung, mit Hilfe einer geringen Pedalkraft eine hohe Ausrückkraft zur Kupplungsbetätigung ohne pneumatische Kraftverstärkung zu realisieren.

Die genannte Aufgabe wird erfindungsgemäß mit den Merkmalen des Patentanspruchs 1 gelöst. Dabei wird eine Kolben- Zylindereinheit mit einem in einem Gehäuse verschiebbar angeordneten Kolben und zumindest einem zwischen Gehäuse und Kolben vorgesehenem Dichtmittel, das zusammen mit dem Kolben und dem Gehäuse einen mit Hydraulikflüssigkeit gefüllten Druckraum begrenzt und so ausgebildet ist, dass es mit mindestens einer Dichtfläche einen Spalt zwischen zwei axial zueinander verlaufenden Flächen abdichtet und entweder der abgedichtete Spalt oder der abgedichtete Spalt mit der Druckfläche des Kolbens die wirksame Druckfläche definiert, die über den axialen Weg des Kolbens veränderbar ist.

Durch diese Veränderung der Druckfläche des Kolbens in ihrer Größe wird eine feinfühlige Stufung des Kraftverlaufs bei gleich bleibendem Druck entlang des Kolbenweges in beispielsweise einem hydraulischem System erzielt.

Dazu wird in einer vorteilhaften Ausgestaltung der Erfindung eine Änderung des Spaltes mit Hilfe einer Formänderung im Druckbereich entweder der Oberfläche des Kolbens als bewegtem Bauteil oder einer mit der Oberfläche des Kolbens axial zu kontaktierenden Innenwand eines stehenden Bauteils hervorgerufen.

Eine weitere vorteilhafte Ausgestaltung der Erfindung sieht vor, dass der Kontakt zwischen der Oberfläche des Kolbens und der ihn umgebenden Innenwand im Druckbereich über ein sich in axialer und radialer Richtung bewegbares Bauteil hergestellt wird, das die beiden Oberflächen gegeneinander abdichtet.

In vorteilhafter Weise ist die Dichtung als Lippendichtung ausgebildet und liegt mit ihrer dynamischen Dichtlippe an einer im Abstand zur Zylinderachse veränderlichen Oberfläche an.

Eine andere vorteilhafte Ausgestaltung der Erfindung sieht vor, dass sich der Durchmesser des Kolbens in axialer Richtung kurvenförmig verjüngt und nach Erreichung eines Maximalwertes kurvenförmig den Ausgangsdurchmesser annimmt.

Weiterhin ist von Vorteil, dass im Zylinder im Bereich des Druckraums eine radial in Richtung Zylinderachse kurvenförmige Verdickung vorgesehen ist.

In vorteilhafter Weiterbildung wird die kurvenförmige Verdickung durch die Innenwand des Gehäuses gebildet.

In vorteilhafter Weise ist im Bereich des Druckraums eine Hülse vorgesehen, deren Innenwand eine radial in Richtung Zylinderachse kurvenförmige Verdickung aufweist.

Eine weitere vorteilhafte Ausgestaltung der Erfindung sieht vor, dass eine in den Druckraum reichende, in axialer Richtung kurvenförmige Verdickung in einem Geberzylinder oder Nehmerzylinder vorgesehen ist.

Von Vorteil ist ebenfalls, dass der sich im Druckbereich in axialer Richtung kurvenförmig verjüngende Kolben in einem Geberzylinder angeordnet ist.

In einer weiteren besonders vorteilhaften Ausgestaltung der Erfindung sind Geberzylinder und Nehmerzylinder hydraulisch miteinander verbunden und Teil eines Kupplungsbetätigungssysystems.

Die Erfindung soll nachfolgend anhand eines Ausführungsbeispiels näher erläutert werden.

Es zeigen:

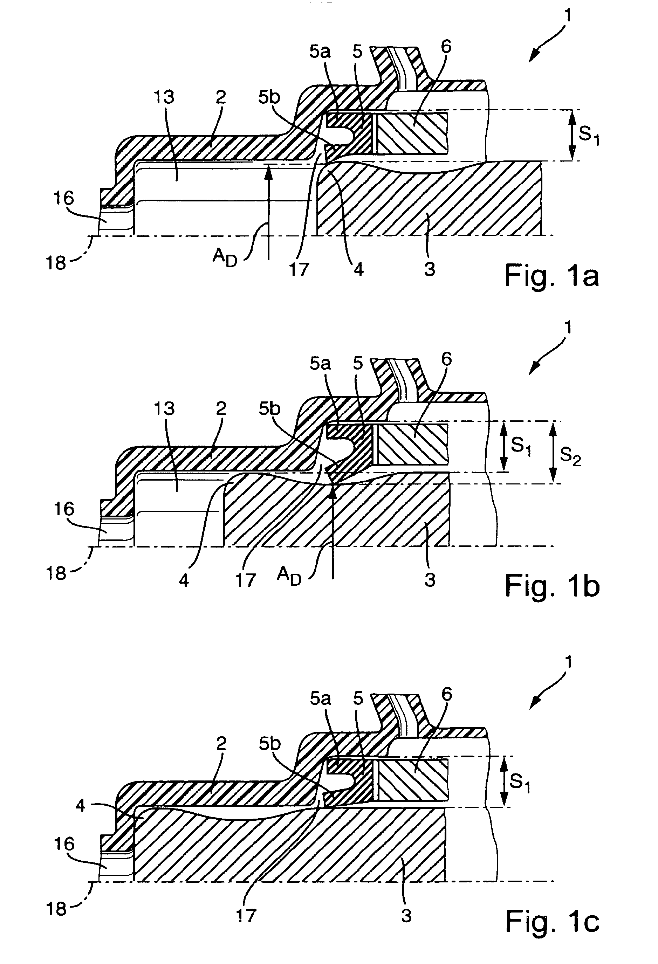

- Fig. 1 a: erfindungsgemäßer Kolben mit Dichtung in seiner ersten Endstellung
- Fig. 1 b: erfindungsgemäßer Kolben mit Dichtung in einer Zwischenstellung
- Fig. 1 c: erfindungsgemäßer Kolben mit Dichtung in seiner zweiten Endstellung
- Fig. 2: Nehmerzylinder mit erfindungsgemäßem Gehäuseflansch
- Fig. 3: Geberzylinder mit eingebrachter erfindungsgemäßer Hülse, wobei der Kolben in zwei verschiedenen Stellungen dargestellt ist.

Die Figuren 1a bis 1 c stellen den Bewegungsablauf eines in einem hydraulischen System angeordneten Geberzylinders 1 dar, in dessen Gehäuse 2 ein Kolben 3 mit einer im Druckbereich von der zylindrischen Form abweichenden Kontur axial verschiebbar eingebracht ist. Ausgehend von der Betätigung eines Mechanismus, in den eine Kraft eingeleitet wird und sich der Kolben 3 in seiner ersten Endstellung befindet, bewegt sich dieser durch Kraftbeaufschlagung stufenlos über Zwischenstellungen in seine zweite Endstellung, die das Ausrücken beispielsweise einer Kupplung bewirkt. Die Figuren 1a und 1 c verkörpern jeweils eine Stellung des Kolbens 3, nach der eine Richtungsumkehr des Kolbens 3 im Gehäuse 2 stattfindet. In der Figur 1 b ist eine zwischen diesen beiden Endstellungen eingenommene Zwischenstellung des Kolbens 3 dargestellt.

Die Figur 1a zeigt einen in einem Gehäuse 2 eines Geberzylinders 1 axial verschiebbar angeordneten Kolben 3, der sich vor Betätigung des Kupplungspedals in seiner ersten Endstellung befindet. Zwischen Gehäuse 2 und Kolben 3 ist zur Abdichtung eine Dichtung 5 in Form einer Lippendichtung vorgesehen. Diese Art der Dichtung 5 mit ihren asymmetrisch angeordneten Dichtlippen 5a und 5b, zwischen denen eine V-förmig gestaltete Ausnehmung vorhanden ist, wird vorzugsweise eingesetzt, da sie auf Grund ihrer ausgeprägten Form mehrere Eigenschaften in sich vereint. So werden mit Hilfe der entsprechenden Dichtlippe 5a (statische Dichtlippe) oder 5b (dynamische Dichtlippe) zusätzlich zur Dichtwirkung unterschiedlich geforderte Freiheitsgrade realisiert.

Diese Lippendichtung 5 ist am Dichtungsträger 6 angeordnet und dichtet den Raum zwischen der Innenwand des Gehäuse 2 und der Oberfläche des Kolbens 3 ab. Mit ihrer statischen Dichtlippe 5a, d. h. diese Dichtlippe bewegt sich nicht relativ zum Gehäuse 2, liegt sie an der Innenwand des Gehäuses 2 und mit ihrer dynamischen, durch den Kolben bewegbaren Dichtlippe 5b, an der Oberfläche des Kolbens 3 an. Der Raum, der abgegrenzt wird von der Dichtung 5, dem Kolben 3 und dem Gehäuse 2, definiert den Druckraum 13. Der Abstand s₁ der Oberfläche des Kolbens 3 zur Innenwand des Gehäuses 2 ist so gewählt, dass ein Spalt 17 vorhanden bleibt, der von der dynamischen Dichtlippe 5b der Dichtung 5 abgedichtet werden muss. Mehrere an der Stirnfläche des Kolbens 3 in Umfangsrichtung angeordnete Schnüffelnuten 4 sorgen für einen Druckausgleich in der ersten Endstellung des Kolbens 3.

In der in Figur 1a dargestellten Stellung des Kolbens 3 ist der Druckraum 13 maximal mit Hydraulikflüssigkeit gefüllt. Der Kolben 3 ist im Druckbereich so ausgebildet, dass sich sein Durchmesser, ausgehend von einem Ausgangsdurchmesser, in axialer Richtung radial bis zu einem Tiefstpunkt verjüngt, um dann wieder ebenso in axialer Richtung auf den Ausgangsdurchmesser anzusteigen. In der gezeigten ersten Endstellung des Kolbens 3 liegt die Dichtung 5 mit ihrer Dichtlippe 5b am Ausgangsdurchmesser des Kolbens 3 an, in der die Breite s₁ des Spaltes 17 am geringsten ist.

Die Figur 1 b zeigt die Stellung des Kolbens 3, der sich durch Kraftbeaufschlagung in Richtung Druckraum 13 bewegt hat. In dieser Stellung wird deutlich, wie die Dichtung 5 mit ihrer Dichtlippe 5b sich der Ausnehmung des Kolbens 3 anpassend, den Spalt 17 abdichtet, der an dieser Stelle, der engsten Einschnürung, die damit gleichzeitig die kleinste Druckfläche A_{D} des Kolbens 3 definiert, am größten ist.

In der Figur 1c ist die zweite Endstellung des Kolbens 3 dargestellt, bei der die Dichtlippe 5b infolge der Zunahme des Durchmessers und damit der Druckfläche A_{D} des Kolbens 3 wieder in ihre Ausgangsstellung zurück bewegt wurde. In dieser Stellung des Kolbens 3 ist die die Hydraulikflüssigkeit aus dem Druckraumes 13 über den Druckmediumsanschluss 16 in eine Druckmediumsleitung abgegeben worden.

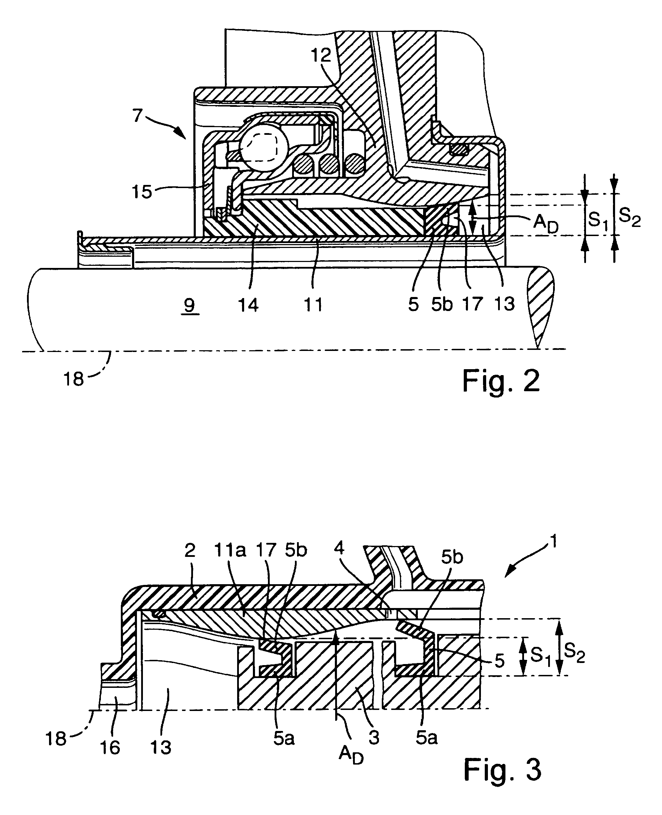

Aus der Figur 2 ist ein Nehmerzylinder 7 ersichtlich, der in dieser Darstellung als Zentralausrücker ausgeführt ist und im Wesentlichen einen in einem Gehäuseflansch 12 axial verschiebbaren Ringkolben 14 enthält, an dem stirnseitig eine Lippendichtung als Dichtung 5 mit ihren Dichtlippen 5a und 5b angebracht ist. Dieser Ringkolben 14 liegt mit seiner statischen Dichtlippe 5a der Dichtung 5 an einer Führungshülse 11 und mit seiner dynamischen Dichtlippe 5b an der Verdickung des Gehäuseflansches 12 an. Diese ist im Druckbereich so ausgebildet, dass sie eine in axialer Richtung zunächst ansteigende und nach Erreichung eines Höchstpunktes absteigende Verdickung aufweist, die in den Druckraum 13 hineinragt. Die Dichtung 5 wird ebenfalls mit ihrer Dichtlippe 5b bei axialer Bewegung des Ringkolbens 14 entlang dieser vorgegebenen Kontur des Gehäuseflansches 12 bewegt.

Die Figur 3 zeigt einen Geberzylinder 1, in dessen Gehäuse eine Hülse 11a eingefügt ist, deren Wanddicke in axiale Richtung, ausgehend von einer definierten Wandstärke, kurvenförmig zunimmt, bis sie eine maximale Dicke erreicht hat und danach auf die Ausgangswandstärke abfällt. Der Kolben 3 ist in dieser Figur in zwei Stellungen dargestellt.

Ebenso gut kann auch die besondere mit Hilfe der Hülse 11a realisierte Ausformung der Innenfläche im Druckbereich des Gehäuses 2 herstellungstechnisch entweder spanlos oder spanabhebend in das Gehäuse 2 eingebracht werden, so dass ein Adapter in Form einer Hülse 11a entfallen kann. Dies trifft umgekehrt auch für die Figur 2 zu, in die gleichermaßen eine Hülse eingesetzt werden kann. Im Gegensatz zu den vorhergehenden Darstellungen zeigt diese Figur den Kolben 3 in bekannter Weise mit zylindrischer Form. Der zwischen der Oberfläche des Kolbens 3 und umgebender Innenwand vorhandene Spalt 17 wird mit der Dichtung 5 mit den Dichtlippen 5a und 5b einer endseitig in den Kolben 3 eingesetzten Lippendichtung 5 abgedichtet. Ausgehend von einer ersten Endstellung des Kolbens 3 bewegt sich diese nach Kraftbeaufschlagung von seiner ersten in seine zweite Endstellung, die in dieser Figur nicht dargestellt ist. Bei dieser axialen Bewegung wird die Dichtung 5 mit ihrer Dichtlippe 5b entlang der Kontur der Hülse 11a bewegt. Die Dichtlippe 5b passt sich dabei der Kontor der Hülse 11 a an. Der Figur 3 ist zu entnehmen, dass sich nach Kraftbeaufschlagung die über die Oberfläche des Kolbens 3 herausragende Dichtlippe 5b der Lippendichtung 5 der Kontur der Hülse 11a folgend, die V-förmige Ausnehmung zwischen den beiden Dichtlippen 5a und 5b immer kleiner wird, d. h., die dynamische Dichtlippe wird immer näher an die statische Dichtlippe 5a herangedrückt, bis der Abstand zwischen beiden Dichtlippen 5a und 5b bei der maximalen Dicke der Hülse 11a am geringsten. Die Breite S₁ des Spaltes 17 ist somit in dieser Stellung (linke Darstellung) ebenfalls am geringsten.

Die rechte Darstellung der Figur 3 zeigt die zweite Endstellung des Kolbens 3, in der die Dichtlippe 5b der Dichtung 5 ihre maximalste Auslenkung hat und somit die maximalste Breite s₂ des Spaltes 17 abdichten muss.

Mit Hilfe der in den Ausführungsbeispielen gemäß der Figuren 1 bis 3 dargestellten erfinderischen Lösung, die in einer hydraulischen Strecke am optimalsten im Geberzylinder und Nehmerzylinder realisiert ist, verändert sich durch die besondere Formgebung im Bereich des Druckraums mindestens eine der miteinander zu kontaktierenden Flächen bei der Bewegung des Kolbens 3 bzw. 14 stufenlos die hydraulische Übersetzung des hydraulischen Systems. Die Auslegung hinsichtlich Größe und Form der Wölbung bzw. Verdickung hat entsprechend der gewünschten Übersetzung zu erfolgen. Mit Hilfe dieser stufenlosen hydraulischen Übersetzung ist es möglich, dem Drop - Off-Effekt aktiv entgegenzuwirken, d. h., auch nicht lineare Kennlinien, wie beispielsweise die einer Kupplung, zu kompensieren. Im Falle einer Kupplungsbetätigung wird durch diese Lösung die Pedalkraft am Ausrückkraftmaximum abgesenkt und am Ausrückkraftminimum angehoben. Das macht die Betätigung beispielsweise einer Kupplung besonders komfortabel. Versuche haben zudem gezeigt, dass die mit dieser Kolben-Zylindereinheit realisierte hydraulische stufenlose Übersetzung temperaturunabhängig funktioniert, was das Einsatzgebiet sehr vielfältig gestaltet.

Kolben 3 und Gehäuse 2,12 können aus metallischem oder nichtmetallischem Material bestehen, wobei entweder beide aus gleichem oder aus einer Kombination unterschiedlicher Materialien hergestellt sein können. Weiterhin ist bei gleichem Material beider Bauteile eine Beschichtung der Oberfläche zumindest eines der Bauteile mit einem besonders gleitfähigem Material im Bereich der zu kontaktierenden Oberfläche oder im Bereich des Druckraums möglich.

### Bezugszeichenliste

- 1: Geberzylinder
- 2: Gehäuse / Zylindergehäuse
- 3: Kolben
- 4: Schnüffelnut
- 5: Dichtmittel / Dichtung (Lippendichtung)
- 5a: statische Lippe
- 5b: dynamische Lippe
- 6: Dichtungsträger
- 7: Nehmerzylinder
- 8:
- 9: Antriebswelle
- 10: Getriebegehäuse
- 11: Führungshülse
- 11a: Hülse
- 12: Gehäuseflansch
- 13: Druckraum
- 14: Ringkolben
- 15: Stützfläche
- 16: Anschluss an Druckmediumsleitung
- 17: Spalt
- 18: Zylinder-/Kolbenachse
- s₁: minimalste Spaltbreite
- s₂: maximalste Spaltbreite
- A_{D}: wirksame Druckfläche

## Patentansprüche

1. Kolben- Zylindereinheit mit einem in einem Gehäuse (2,12) verschiebbar angeordneten Kolben (3,14) und zumindest einem zwischen Gehäuse (2,12) und Kolben (3,14) vorgesehenen Dichtmittel (5), das zusammen mit dem Kolben (3) und dem Gehäuse (2,12) einen mit Hydraulikflüssigkeit gefüllten Druckraum (13) begrenzt und so ausgebildet ist, dass es mit mindestens einer Dichtfläche einen Spalt (17) zwischen zwei axial zueinander verlaufenden Flächen abdichtet und entweder der abgedichtete Spalt (17) oder der Spalt (17) mit der Druckfläche des Kolbens (3) die wirksame Druckfläche A_{D} definiert, **dadurch gekennzeichnet, dass** die wirksame Druckfläche A_{D} über den axialen Weg des Kolbens (3,14,) veränderbar ist.

2. Kolben- Zylindereinheit nach Anspruch 1, **dadurch gekennzeichnet, dass** die Änderung des Spaltes (17) durch eine Formänderung im Druckbereich entweder der Oberfläche des Kolbens (3,14) als bewegtem Bauteil oder einer mit der Oberfläche des Kolbens (3,14) axial zu kontaktierenden Innenwand eines stehenden Bauteils erfolgt.

3. Kolben- Zylindereinheit nach Anspruch 1, **dadurch gekennzeichnet, dass** der Kontakt zwischen der Oberfläche des Kolbens (3,14) und der ihn umgebenden Innenwand im Druckbereich über ein sich in axialer und radialer Richtung bewegbares Bauteil hergestellt wird, das die beiden Oberflächen gegeneinander abdichtet.

4. Kolben- Zylindereinheit nach Anspruch 1, **dadurch gekennzeichnet, dass** die Dichtung (5) als Lippendichtung ausgebildet ist und mit ihrer dynamischen Dichtlippe (5b) an einer im Abstand zur Zylinderachse (18) veränderlichen Oberfläche anliegt.

5. Kolben- Zylindereinheit nach Anspruch 1, **dadurch gekennzeichnet, dass** sich der Durchmesser des Kolbens (3,14) in axialer Richtung kurvenförmig verjüngt und nach Erreichung eines Maximalwertes kurvenförmig den Ausgangsdurchmesser annimmt.

6. Kolben- Zylindereinheit nach Anspruch 1, **dadurch gekennzeichnet, dass** im Gehäuse (2,12) im Bereich des Druckraums (13) eine radial in Richtung Zylinderachse (18) kurvenförmige Verdickung vorgesehen ist.

7. Kolben- Zylindereinheit nach Anspruch 6, **dadurch gekennzeichnet, dass** die kurvenförmige Verdickung durch die Innenwand des Gehäuses (2,12) gebildet wird.

8. Kolben- Zylindereinheit nach den Ansprüchen 1 und 6, **dadurch gekennzeichnet, dass** im Bereich des Druckraums (13) eine Hülse (11a) vorgesehen ist, deren Innenwand eine radial in Richtung Zylinderachse (18) kurvenförmige Verdickung aufweist.

9. Kolben- Zylindereinheit nach Anspruch 6, **dadurch gekennzeichnet, dass** eine in den Druckraum (13) reichende, in axialer Richtung kurvenförmige Verdickung in einem Geberzylinder (1) oder Nehmerzylinder (7) vorgesehen ist.

10. Kolben- Zylindereinheit nach Anspruch 1, **dadurch gekennzeichnet, dass** der sich im Druckbereich in axialer Richtung kurvenförmig verjüngende Kolben (3,14) in einem Geberzylinder (1) und/oder Nehmerzylinder (7) angeordnet ist.

11. Kolben- Zylindereinheit nach Anspruch 1, **dadurch gekennzeichnet, dass** Geberzylinder (1) und Nehmerzylinder (7) hydraulisch miteinander verbunden und Teil eines Kupplungsbetätigungssysystems sind.

## Claims

1. Piston and cylinder unit having a piston (3, 14) situated movably in a housing (2, 12) and at least one sealing means (5) provided between housing (2, 12) and piston (3, 14), which together with the piston (3) and the housing (2, 12) bounds a pressure chamber (13) filled with hydraulic fluid, and is designed so that with at least one sealing surface it seals a gap (17) between two surfaces that run axially with respect to each other, and either the sealed gap (17) or the gap (17) together with the pressure surface of the piston (3) defines the effective pressure surface A_{D}, **characterized in that** the effective pressure surface A_{D} is changeable over the axial travel of the piston (3, 14).

2. Piston and cylinder unit according to Claim 1, **characterized in that** the change in the gap (17) results from a deformation in the pressure zone either of the surface of the piston (3, 14) as a movable component, or of an inner wall of a stationary component that is to make contact axially with the surface of the piston (3, 14).

3. Piston and cylinder unit according to Claim 1, **characterized in that** the contact between the surface of the piston (3, 14) and the inner wall surrounding it in the pressure zone is produced through a component that is movable in axial and radial directions, which seals the two surfaces from each other.

4. Piston and cylinder unit according to Claim 1, **characterized in that** the seal (5) is designed as a lip seal, and its dynamic sealing lip (5b) is in contact with a surface whose distance from the cylinder axis (18) is changeable.

5. Piston and cylinder unit according to Claim 1, **characterized in that** the diameter of the piston (3, 14) tapers in a curve in the axial direction, and after reaching a maximum value in a curved shape assumes the starting diameter.

6. Piston and cylinder unit according to Claim 1, **characterized in that** a curved thickening radially in the direction of the cylinder axis (18) is provided in the housing (2, 12) in the area of the pressure chamber (13).

7. Piston and cylinder unit according to Claim 6, **characterized in that** the curved thickening is formed by the inner wall of the housing (2, 12).

8. Piston and cylinder unit according to Claims 1 and 6, **characterized in that** a sleeve (11a) whose inner wall has a curved thickening radially in the direction of the cylinder axis (18) is provided in the area of the pressure chamber (13).

9. Piston and cylinder unit according to Claim 6, **characterized in that** a curved thickening in the axial direction, extending into the pressure chamber (13), is provided in a master cylinder (1) or slave cylinder (7).

10. Piston and cylinder unit according to Claim 1, **characterized in that** the piston (3, 14), which tapers in a curve in an axial direction in the pressure zone, is situated in a master cylinder (1) and/or slave cylinder (7).

11. Piston and cylinder unit according to Claim 1, **characterized in that** master cylinder (1) and slave cylinder (7) are hydraulically connected with each other and are part of a clutch actuating system.

## Revendications

1. Ensemble piston/cylindre avec un piston (3, 14) agencé coulissant dans un carter (2, 12) et pour le moins un moyen d'étanchéité (5) prévu entre le carter (2, 12) et le piston (3, 14), qui délimite conjointement avec le piston (3) et le carter (2, 12) une chambre de pression (13) remplie de fluide hydraulique et est conçu de telle manière qu'il étanchéifie avec au moins une surface d'étanchéité un interstice (17) entre deux surfaces évoluant axialement l'une par rapport à l'autre et soit l'interstice étanchéifié (17) soit l'interstice (17) avec la surface de pression du piston (3) définit la surface de pression active A_{D}, **caractérisé en ce que** la surface de pression active A_{D} peut être modifiée sur la course axiale du piston (3, 14).

2. Ensemble piston/cylindre selon la revendication 1, **caractérisé en ce que** la modification de l'interstice (17) est effectuée grâce à une déformation dans la zone de pression soit de la surface du piston (3, 14) en tant que composant en mouvement soit d'une paroi intérieure d'un composant vertical à mettre en contact axial avec la surface du piston (3, 14).

3. Ensemble piston/cylindre selon la revendication 1, **caractérisé en ce que** le contact entre la surface du piston (3, 14) et la paroi intérieure l'entourant est établi dans la zone de pression par l'intermédiaire d'un composant mobile dans les directions axiales et radiales, qui étanchéifie les deux surfaces l'une par rapport à l'autre.

4. Ensemble piston/cylindre selon la revendication 1, **caractérisé en ce que** la garniture (5) est conçue sous forme de joint à lèvres et s'applique avec sa lèvre d'étanchéité dynamique (5b) contre une surface variable quant à l'écartement par rapport à l'axe du cylindre (18) .

5. Ensemble piston/cylindre selon la revendication 1, **caractérisé en ce que** le diamètre du piston (3, 14) se rétrécit en forme de courbe dans le sens axial et atteint le diamètre initial en forme de courbe après atteinte d'une valeur maximum.

6. Ensemble piston/cylindre selon la revendication 1, **caractérisé en ce qu'**un épaississement en forme de courbe radialement en direction de l'axe du cylindre (18) est prévu dans le carter (2, 12) dans la zone de la chambre de pression (13).

7. Ensemble piston/cylindre selon la revendication 6, **caractérisé en ce que** l'épaississement en forme de courbe est formé par la paroi intérieure du carter (2, 12).

8. Ensemble piston/cylindre selon l'une quelconque des revendications 1 et 6, **caractérisé en ce qu'**une douille (11a) est prévue dans la zone de la chambre de pression (13), dont la paroi intérieure présente un épaississement en forme de courbe radialement dans le sens de l'axe du cylindre (18).

9. Ensemble piston/cylindre selon la revendication 6, **caractérisé en ce qu'**un épaississement s'étendant dans la chambre de pression (13), en forme de courbe dans le sens axial est prévu dans un maître-cylindre (1) ou cylindre récepteur (7).

10. Ensemble piston/cylindre selon la revendication 1, **caractérisé en ce que** le piston (3, 14) se rétrécissant en forme de courbe dans le sens axial dans la zone de pression est agencé dans un maître-cylindre (1) et/ou cylindre récepteur (7).

11. Ensemble piston/cylindre selon la revendication 1, **caractérisé en ce que** le maître-cylindre (1) et le cylindre récepteur (7) sont reliés ensemble hydrauliquement et font partie d'un système de commande de l'embrayage.
